Europäisches Patentamt

European Patent Office

Office européen des brevets

(19)

(11) Veröffentlichungsnummer : **0 070 845**
**B1**

(12) # EUROPÄISCHE PATENTSCHRIFT

(45) Veröffentlichungstag der Patentschrift :
07.05.86

(21) Anmeldenummer : **82900338.3**

(22) Anmeldetag : **01.02.82**

(86) Internationale Anmeldenummer :
**PCT/CH 82/00013**

(87) Internationale Veröffentlichungsnummer :
**WO/8202723 (19.08.82 Gazette 82/20)**

(51) Int. Cl.⁴ : **C 12 G   3/08**

(54) VERFAHREN ZUR HERSTELLUNG VON ALKOHOLFREIEM WEIN ODER FRUCHTWEIN.

Verbunden mit 82810042.0/58634 (europäische Anmeldenummer/Veröffentlichungsnummer) durch Entscheidung vom 20.02.84.

(30) Priorität : **06.02.81 CH 889/81**

(43) Veröffentlichungstag der Anmeldung :
**09.02.83 Patentblatt 83/06**

(45) Bekanntmachung des Hinweises auf die Patenterteilung : **07.05.86 Patentblatt 86/19**

(84) Benannte Vertragsstaaten :
**AT BE CH DE FR GB IT LI LU NL SE**

(56) Entgegenhaltungen :
**DE-A- 1 442 238**
**FR-A-   541 873**
**FR-A-   696 773**
**FR-A- 2 219 972**
**FR-A- 2 256 244**
**GB-A-   139 099**
**GB-A- 1 092 458**

(73) Patentinhaber : Schweizerische Eidgenossenschaft handelnd durch die Eidg.Forschungsanstalt für Obst-, Wein- und Gartenbau Wädenswil

**CH-8820 Wädenswil (CH)**

(72) Erfinder : **SCHOBINGER, Ulrich**
**Bellevueweg 17**
**CH-6300 Zug (CH)**
Erfinder : **WALDVOGEL, Robert**
**Nordstrasse 6**
**CH-8820 Wädenswil (CH)**
Erfinder : **DÜRR, Peter**
**Speerstrasse 12**
**CH-8820 Wädenswil (CH)**

(74) Vertreter : **Monsch, René et al**
**E. BLUM & CO., Patentanwälte Vorderberg 11**
**CH-8044 Zürich (CH)**

## Beschreibung

Die Erfindung betrifft ein Verfahren zur Herstellung von alkoholfreiem Wein oder Fruchtwein, wobei der ursprünglich vorhandene Alkoholgehalt soweit reduziert wird, dass letzterer in den erfindungsgemäss hergestellten Produkten die lebensmittelrechtlich gesetzten Grenzwerte für alkoholfreie Fruchtsäfte oder alkoholfreies Bier nicht überschreitet. Insbesondere gestattet das erfindungsgemässe Verfahren alkoholfreie Weine oder Fruchtweine herzustellen, deren Aethylalkoholgehalt unter dem in den internationalen Normen des Codex Alimentarius der FAO/WHO für Fruchtsäfte festgelegten Grenzwert von 5 g/kg liegt.

Ein alkoholfreier Wein oder Fruchtwein soll, entsprechend der Bezeichnung, alle ursprünglichen Komponenten des alkoholhaltigen Ausgangsmaterials enthalten, ausser Alkohol. Artfremde Zusätze sind aus grundsätzlichen und vor allem auch aus lebensmittelrechtlichen Ueberlegungen auszuschliessen. Neben der löslichen Trockensubstanz bzw. den Extraktstoffen sollen vor allem auch die flüchtigen Aromastoffe noch möglichst weitgehend vorhanden sein. Diese umfassen sowohl die bereits in der Traube vorhandenen sortentypischen Aromastoffe, z. B. Muskat-Aroma, als auch die bei der alkoholischen Gärung entstehenden Nebenprodukte. Dazu zählen insbesondere die höheren Alkohole, ferner Ester, Aldehyde, Ketone, Säuren, Lactone etc. Die gesamte Menge der Aromastoffe in Wein oder Fruchtwein ist sehr gering und beträgt ca. 0.5-1 g/l. Trotzdem sind sie für den Charakter eines Weines oder Fruchtweines von entscheidender Bedeutung.

Bis heute ist es nicht gelungen, sog. alkoholfreie Weine oder Fruchtweine von befriedigender geruchlicher und geschmacklicher Qualität herzustellen. Die bisher verwendeten thermischen Verfahren für den Entzug von Alkohol durch direkte Destillation von Wein oder Fruchtwein ergeben Produkte von ungenügender sensorischer Qualität, weil durch die genannten Prozesse mit dem Alkohol auch die Aromastoffe weitgehend entfernt werden. Weder ein nachträglicher Zusatz einer geringen Menge Wein oder Fruchtwein, unter Berücksichtigung der gesetzlichen Grenzwerte, noch ein Zusatz von Gärungskohlensäure zum entalkoholisierten Produkt ergeben bezüglich Aromastoffmenge ein befriedigendes Resultat. Vielfach weisen die nach den genannten Verfahren hergestellten Produkte infolge längerer Aufenthaltszeit bei höheren Temperaturen zusätzlich noch Hitzeschäden (sog. Kochton) auf. Auch das schonende Verfahren der Umkehrosmose ist für die Herstellung von alkoholfreien Weinen oder Fruchtweinen mit einem Alkoholgehalt unter 5 g/kg nicht verwendbar, da gleichzeitig mit dem Alkohol auch die Aromastoffe durch die Membran diffundieren und somit weitgehend verloren gehen. Andere Verfahren, wie die vorzeitige Abstoppung der Gärung, führen zu unausgereiften mostigen Weinen bzw. Fruchtweinen, welche in geschmacklicher Hinsicht keineswegs zu befriedigen vermögen.

Im folgenden werden einige zum Stand der Technik gehörende Dokumente abgehandelt.

FR-A-2 256 244 (H.J. Thumm), 25. Juli 1975

Diese Anmeldung betrifft ein Verfahren zur Herstellung von Wein und Alkohol, wobei das Hauptziel die Herstellung eines Weines mit geringem Alkoholgehalt ist, um die durch die Rückstände der Weindestillation entstehende Belastung der Abwässer zu vermeiden. Bei diesem Verfahren wird jedoch nur mit teilweise vergorenem Wein gearbeitet, der durch eine gewollte Unterbrechung der Gärung erhalten wird. Der Restzuckergehalt liegt dabei zwischen 4 bis 8° Bé entsprechend 70-145 g/l Zucker. Durch diesen Zuckergehalt ergibt sich eine beträchtliche Reduktion des Alkoholgehaltes im Ausgangswein um 4 bis 8 Vol.%. Da weniger Zucker vergoren wird, enthält der Wein auch weniger sekundäre Aromastoffe, die bei der Gärung durch Hefe gebildet werden. Der erreichte Alkoholgehalt im entalkoholisierten Fertigprodukt wird mit ca. 1 Vol.% angegeben (vgl. Seite 6/Zeilen 32-34) und liegt damit um mehr als das Zweifache über dem international festgelegten CODEX-Grenzwert für Alkohol von 5 g/kg = 0,5 Gew.% in alkoholfreien Getränken. Im erfindungsgemässen Verfahren wird dagegen von vollständig vergorenem Wein bzw. Fruchtwein ausgegangen und der erreichte Alkoholgehalt liegt wesentlich unterhalb dem international festgelegten CODEX-Grenzwert von 0,5 Gew.%.

FR-A-541 873 (G. Capelle), 2. August 1922

Dieses patentierte Verfahren aus dem Jahre 1922 vermittelt bereits die grundlegende Idee der teilweisen oder vollständigen Entalkoholisierung von Wein und anderen vergorenen Getränken. Im Gegensatz zum erfindungsgemässen Verfahren wird der Wein direkt einer Destillation unterzogen, wobei analog wie bei der Weinbrandherstellung zweimal destilliert wird. Das anfallende erste Destillat wird unter Zusatz von bestimmten Salzen, z. B. $CaCl_2$, $MgNO_3$ (vgl. Seite 2/Zeilen 85-90), einer zweiten Destillation unterworfen, wobei die abgetrennten Aromastoffe dem Rückstand der ersten Destillation wieder zugemischt werden.

Es handelt sich bei dieser Anlage um eine einfache Destillationseinrichtung, wie sie in bäuerlichen Obstbrennereien benützt wird, und nicht um eine separate Gegenstromdestillation in einer mit

# 0 070 845

spezifischen Füllkörpern beladenen Destillationskolonne. Da eine Destillation von Wein aus einer Blase länger dauert als eine Schnellverdampfung in einer modernen Verdampferanlage, schlägt man in diesem französischen Patent den Zusatz von Aktivkohle in die Blasenflüssigkeit vor (vgl. Seite 2/Zeilen 91-93). Dadurch können wohl die in der Brennblase entstandenen unerwünschten Zersetzungsprodukte abgebunden werden, gleichzeitig bindet die Aktivkohle sicherlich einen grossen Teil der erwünschten Weinaromastoffe. Auch die bei der Destillation vorgeschlagene Einführung von Sauerstoffgas (vgl. Seite 2/Zeilen 80-84) ist aufgrund der heutigen Kenntnisse für die Qualität der Bukettstoffe eher schädlich als nützlich. Neben diesen negativen Einflüssen auf die sensorische Qualität des Endprodukts ist es sehr fraglich, ob mit diesem französischen Verfahren der Alkohol genügend von den Weinaromastoffen getrennt werden kann.


GB-A-1 390 099 (J. Schneible), 26. Februar 1920

Diese Anmeldung betrifft ein Verfahren zur destillativen Abtrennung von Alkohol aus Wein oder Bier in einem kontinuierlichen Prozess mit Vorheizeinrichtung und einer Fraktionierkolonne mit Dephlegmator.

Im Gegensatz zum erfindungsgemässen Verfahren wird der erhitzte Wein oder das Bier direkt der Kolonnendestillation unterworfen, wodurch eine stärkere Wärmebeeinträchtigung des entalkoholisierten Endprodukts eintritt, weil insbesondere die nichtflüchtigen Stoffe wie Säuren, Gerbstoffe, Mineralsalze, Zucker, Aminosäuren in der heissen Kolonne bzw. Brennblase zu unerwünschten Zersetzungsprodukten führen. Die niedersiedenden Aromakomponenten (Kopfprodukte) werden entweder in die umgebende Atmosphäre abgelassen oder durch eingeleiteten Sauerstoff + Kupfermetallkontakt zu organischen Säuren zersetzt, die in die Brennblase abgliessen (vgl. Seite 4/Zeilen 19-27). Die höhersiedenden Aromastoffe gelangen mit den nicht-flüchtigen Bestandteilen ebenfalls nach unten in die Brennblase und diese Blasenprodukte werden insgesamt zum alkoholfreien Getränk aufgemischt. Da dieses Gemisch von flüchtigen und nicht-flüchtigen Weinbestandteilen, inklusive die aus der Oxidation der niedersiedenden Aromastoffe stammenden Oxidationsprodukte in der Brennblase durch Wärme zu unerwünschten Geschmackskomponenten führen, kann das unter Verwendung der Blasenprodukte aufgemischte alkoholfreie Getränk nie zu geschmacklich einwandfreien Produkten führen. Im erfindungsgemässen Verfahren wird dagegen das Kopfprodukt und das Blasenprodukt (Lutterwasser) dem alkoholfreien Endprodukt nicht beigemischt und die nicht-flüchtigen Weinbestandteile werden durch vorherige Schnellverdampfung von den flüchtigen Bestandteilen getrennt. Die erwünschten höhersiedenden Aromastoffe werden bei kontinuierlicher Arbeitsweise unterhalb der Einspeisestelle für das alkoholische Aromakondensat entnommen und hernach dem alkoholfreien Weingetränk beigemischt.


DE-A-1 442 238 (Henninger-Bräu KGaA), 12. Dez. 1968

Dieses Verfahren ermöglicht lediglich die Herstellung eines alkoholreduzierten Bieres durch Abdampfen von Bier in einem Dünnschichtverdampfer unterhalb 70 °C. Die mittels Gegenstromdestillation erreichte Trennung in eine leichtflüchtige Fraktion 1, eine Alkoholfraktion 2 und eine schwerflüchtige Fraktion 3 führt scheinbar nicht zu einer genügenden Trennung der Aromastoffe vom Alkohol, denn durch Vereinigung der beiden Aromafraktionen 1 und 3 resultiert im fertigen Endprodukt ein Alkoholgehalt von 1,45 Gew.%, was einem Anteil von 35 % des ursprünglich vorhandenen Alkoholgehaltes im Ausgangsbier entspricht (vgl. analyt. Werte in der Tabelle der Spalten 3/4 der deutschen Patentanmeldung 1 442 238).

Ein weiterer Nachteil dieses Verfahrens besteht darin, dass der Schnellverdampfer und die Gegenstromdestillationslolonne in einer Anlage vereinigt sind, was den Nachteil hat, dass die Kolonne für eine so heikle Trennaufgabe nie genau im Gleichgewicht gehalten werden kann. Zudem werden überhaupt keine technischen Angaben über den Aufbau der für eine solche Trennung von Alkohol und Aromastoffen erforderlichen Rektifikationseinrichtung, wie z. B. notwendige Anzahl an theoretischen Trennstufen, Füllkörpercharakteristiken etc., gegeben. Es ist deshalb auch nicht verwunderlich, dass dieses geschilderte Verfahren lediglich eine Alkoholreduktion von ca. 65 % ermöglicht, während das erfindungsgemässe Verfahren mit zweistufiger Fahrweise, d. h. zuerst Schnellverdampfung und dann separate Gegenstromdestillation mit spezifischer Einrichtung und Schaltung, zu einer Alkoholreduktion im fertigen Getränk von 97-98 % führt. Im Gegensatz zum erfindungsgemässen Verfahren werden die leichtflüchtigen Stoffe (Vorlauf) wie Methanol, Essigsäure, Aethylacetat, die eher unerwünscht sind und auch das aus der Kolonne zurückfliessende Lutterwasser mit seinen unerwünschten Geruchs- und Geschmackskomponenten dem entalkoholisierten Getränk beigemischt.


FR-A-696 773 (M.G. Coupeau et al.), 7. Januar 1931

Dieses Verfahren zur Alkoholentfernung aus Wein beruht auf einer in Frankreich bekannten

**0 070 845**

Brennereieinrichtung zur Herstellung von Weinbrand durch fraktionierte Destillation, wobei nicht wie üblich bei Normaldruck, sondern im Vakuum gearbeitet wird. Die Rückstände der beiden Destillationen zusammen mit dem Vorlauf und den Fuselölen werden vereinigt und zum fertigen Getränk mit gewünschtem Alkoholgehalt aufgemischt. Mit der beschriebenen Vorrichtung kann keine genügende Auftrennung von Alkohol und Bukettstoffen erreicht werden und die geschmackliche Qualität des Endprodukts ist sicher ungenügend.

FR-A-2 219 972 (B. Deglon), 27. September 1974

Diese Anmeldung betrifft ein Verfahren zur teilweisen Abtrennung von Alkohol und Aromastoffen eines Weines durch direkte Destillation mit fraktionierter Kondensation. Der Alkohol wird dabei nicht völlig entzogen und liegt zwischen 2 und 6 Vol.% Alkohol (vgl. Patentanspruch 9 bzw. Seite 3/Zeilen 30-32). Zudem werden die Aromastoffe während der Destillation bewusst oxidiert durch Einleiten von Sauerstoff (vgl. Patentanspruch 5), was sich in sensorischer Hinsicht nur negativ auswirken kann.

GB-A-1 092 458 (Henninger-Bräu KGaA), 22. November 1967

Dieses Patent beschreibt ein Verfahren zur Herstellung von Bierkonzentrat und einer aromahaltigen Alkoholfraktion, die nachher dem Bierkonzentrat wieder beigemischt wird. Die Trennung von Alkohol und Aromastoffen wird mit diesem Verfahren nicht erreicht, denn Schnellverdampfer und Destillationskolonne sind miteinander direkt verbunden, wodurch die Destillationskolonne sehr schwer im Gleichgewicht zu halten ist. Im Gegensatz zum efindungsgeneifen Verfahren erfolgt bei kontinuierlicher Arbeitsweise die Einspeisung der alkoholhaltigen Brüden unten an der Fraktionskolonne und der Alkohol wird zusammen mit den Aromastoffen im Kolonnenkopf entnommen.

Gegenstand der vorliegenden Erfindung betrifft ein Verfahren zur Herstellung von alkoholfreiem Wein oder Fruchtwein, wobei in einem ersten Schritt der Alkohol zusammen mit den Aromastoffen aus dem Wein bzw. Fruchtwein abgedampft, das alkohol- und aromahaltige Brüdenkondensat in einem zweiten Schritt rektifiziert, die dabei abgetrennten Aromastoffe in einem dritten Schritt dem entalkoholisierten Konzentrat wieder beigefügt und zusammen mit einem entaromatisierten Traubensaft bzw. Fruchtsaft und entmineralisiertem oder destilliertem Wasser zum fertigen alkoholfreien Getränk aufgemischt wird.

Die vorgängige Entaromatisierung der für die geschmackliche Harmonisierung verwendeten Fruchtsäfte (Traubensaft, Apfelsaft etc.) ist für das erfindungsgemässe Verfahren zur Herstellung von alkoholfreiem Wein oder Fruchtwein mit einem Alkoholgehalt < 5 g/kg unbedingt erforderlich, um einerseits den in Fruchtsäften stets in kleineren Mengen vorhandenen Alkohol zu entfernen, anderseits um unerwünschte dumpfe Geruchskomponenten und sogenannte fruchtigsüsse Aromakomponenten zu eliminieren. Die dazu erforderliche Abdampfrate liegt zwischen 15-30 %.

Die für die erfindungsgemässe Abdampfung des Alkohols und der Aromastoffe geeigneten Anlagen umfassen insbesondere solche Verdampfer, welche eine möglichst rasche und schonende Eindampfung von Wein oder Fruchtwein gestatten, wie z. B. Röhrenverdampfer, Plattenverdampfer, Dünnschichtverdampfer, Expanding-Flow-Verdampfer, Zentrifugalverdampfer, Zweistoff- oder Tieftemperaturverdampfer. Die Verdampfungstemperaturen können variieren zwischen 15° bis gegen 100 °C. Die Aufenthaltszeit des Produkts bei den tieferen Temperaturen beträgt z. B. 15-20 Minuten, bei höheren Temperaturen 1-4 Minuten, bei Dünnschicht- und Zentrifugalverdampfern weit weniger als 1 Minute. Die Verdampfung kann entweder durchgehend bei Unterdruck oder bei Normaldruck und Unterdruck durchgeführt werden.

Die bei der erfindungsgemässen Verdampfung von Wein oder Fruchtwein anfallenden alkohol- und aromahaltigen Brüdendämpfe müssen in geeigneten Kühlern möglichst verlustlos kondensiert und auf Temperaturen unter 20 °C abgekühlt werden. Die zur praktisch völligen Entalkoholisierung notwendige Abdampfrate beträgt je nach Verdampfertyp und Verdampfungsart 30-60 %.

Die Verdampfung des Weines bzw. Fruchtweines muss soweit erfolgen, dass der verbleibende Restalkoholgehalt im Wein- bzw. Fruchtweinkonzentrat nach Rückverdünnung auf Ursprungsstärke unter 2 g/l absinkt. Die Verdampfung erfolgt bevorzugt mehrstufig im Vakuum. Durch eine 15-20 %-ige Verdampfung von Wein bzw. Fruchtwein bei Normaldruck in einem 1-Stufenverdampfer kann bereits der grösste Teil der Aromastoffe gewonnen werden. Der restliche Alkohol kann durch eine zusätzliche Abdampfung von 15-25 % im Vakuum unter die oben zitierte Grenze von 2 g/l reduziert werden.

Die nach dem erfindungsgemässen Verfahren erhaltenen Brüdenkondensate weisen neben Alkohol den grössten Teil der charakteristischen Aromastoffe auf. Es zeigte sich nun, dass diese extraktfreien Brüdenkondensate, im Gegensatz zu Wein oder Fruchtwein, bei der anschliessenden Rektifikation weitgehend stabil sind, d. h. auch bei längerdauernder Rektifikation in der Destillierkolonne treten keine nennenswerten Hitzeschäden ein.

Die gewünschte Trennung des Alkohols von den Aromastoffen wird nach dem erfindungsgemässen Verfahren durch Gegenstromdestillation der vereinigten Brüdenkondensate in einer Rektifizierkolonne von genügender Wirksamkeit erreicht. Als Rektifizierapparate eignen sich die in der Destillationstechnik

4

bekannten Boden- und Füllkörperkolonnen sowie Sonderkonstruktionen, z. B. Sulzerkolonnen. Die Art der Kolonne ist für das erfindungsgemässe Verfahren nicht von entscheidender Bedeutung, hingegen muß die Zahl der erforderlichen theoretischen Trennstufen über 40, besser zwischen 60-80 liegen, um eine genügend wirkungsvolle Fraktionierung zu erreichen.

Bei diskontinuierlichem Betrieb der Gegenstromdestillation wird das im untern Drittel bis auf halber Höhe eingespiesene alkohol- und aromahaltige Brüdenkondensat nach Siedebereichen in folgende Fraktionen zerlegt und über den Kolonnenkopf entnommen :

| | |
|---|---|
| Vorlauf (vorwiegend Methanol und Aethylacetat) | bis 76 °C |
| Alkoholfraktion (vorwiegend Aethanol) | 76-78 °C |
| Aromafraktionen (wichtigste Aromastoffe, wenig Aethanol) | 77-97 °C |

Bei kontinuierlichem Betrieb der Gegenstromdestillation wird das im mittleren Drittel der Fraktionierkolonne eingespiesene alkohol- und aromahaltige Brüdenkondensat wie folgt fraktioniert : Der Vorlauf und die Alkoholfraktion im Siedebereich bis gegen ca. 77 °C werden über den Kolonnenkopf, die Aromafraktionen im Siedebereich von 77-97 °C werden seitlich unterhalb der Einspeisestelle der Kolonne entnommen. Der Blaseninhalt wird durch kontinuierliches Wegpumpen von Flüssigkeit auf konstantem Niveau gehalten.

Die im Siedebereich von 77-97 °C anfallenden Aromafraktionen umfassen sowohl die sortentypischen Aromastoffe sowie den grössten Teil der Gärungsaromen. Für die endgültige Aufmischung des entalkoholisierten Wein- bzw. Fruchtweinkonzentrats zum fertigen alkoholfreien Getränk werden neben entaromatisiertem Trauben- bzw. Fruchtsaft und mineralstofffreiem Wasser nur die im Siedebereich von 77-97 °C erhaltenen Aromafraktionen verwendet. Der Vorlauf und die in die Blase gelangten Destillationsrückstände können für die Aufmischung des alkoholfreien Getränks nicht verwendet werden, da sie zu einem grossen Teil unerwünschte Geruchsund Geschmackskomponenten aufweisen.

Die fertige Mischung wird anschliessend nach allgemein bekannten technologischen Massnahmen zum trinkfertigen alkoholfreien Getränk aufbereitet, indem man die Mischung mit der erforderlichen Menge Kohlensäuregas imprägniert, durch Sterilfiltration und/oder Pasteurisation gegen mikrobiellen, durch Zusatz von Antioxidantien wie $SO_2$ oder Ascorbinsäure gegen oxidativen Verderb stabilisiert.

Anwendungsbeispiel 1

106.5 Liter Rotwein vom Typ Pinot noir (Blauburgunder) aus der Kelterei der Eidg. Forschungsanstalt Wädenswil, mit einem Alkoholgehalt von 10.3 Vol. %, wurden auf einer dreistufigen kombinierten Eindampf- und Aromagewinnungsanlage Typ UNIPEKTIN Pilot Plant P 103 konzentriert. Der Druck dampfseitig im ersten bzw. zweiten und dritten Verdampfungskörper betrug 1.8 bar bzw. 1.35 bar und 650 mbar, im Abscheider III 100 mbar. Die Produkttemperatur in den drei Verdampfungskörpern lag bei ca. 99° bzw. 60° und 35 °C. Der Durchsatz für 106.5 Liter Rotwein betrug insgesamt 46 Minuten, entsprechend 139 l/h. Das Brüdenkondensat aus der ersten und zweiten Verdampfungsstufe wurde vereinigt und erreichte total 37.6 Liter. Das Brüdenkondensat aus der dritten Verdampfungsstufe wurde verworfen, da es nur noch Spuren von Aromastoffen enthielt. Insgesamt fielen 46.4 Liter entalkoholisiertes Weinkonzentrat mit einem Restalkoholgehalt von 0.28 Vol.% (= 2.2 g/l) an. Die Abdampfrate betrug demnach 56.4 %.

2 Liter des erhaltenen aromahaltigen Brüdenkondensats mit einem Alkoholgehalt von 26.8 Vol.% wurden in einer Labor-Rektifizierkolonne von 50 mm Innendurchmesser und 1 600 mm Höhe durch Gegenstromdestillation bei Normaldruck in 3 Fraktionen aufgetrennt. Die Füllkörperkolonne wurde mit Maschendrahtringen mit Steg 3 × 3 mm, 2 500 Maschen/cm², Werkstoff Nr. 4401, beschickt, wodurch mindestens 60 theoretische Trennstufen erreicht werden.

Die Destillationskolonne wurde zuerst mit Wasser bei totalem Rückfluss geflutet. Das vorgängig im Durchlauf auf 75 °C erwärmte Brüdenkondensat wurde auf halber Höhe der Kolonne mit einer Dosierung von 400 ml/h eingespeist. Infolge dieser Einspeisetechnik kann ein Rückfluss der Aromastoffe in die Destillierblase verhindert werden, was zu einer geringeren Wärmebelastung der Aromastoffe führt. Die Abnahme der verschiedenen Fraktionen erfolgte bei einem Rücklaufverhältnis von 1 : 5 bis 1 : 10. Der Destillatanfall betrug ca. 30 ml/h. Es wurden folgende Fraktionen erhalten :

Fraktion 1 : Vorlauf + Aethanol, < 77 °C, 130 ml Destillat à 95.3 Vol.% Alkohol
Fraktion 2 : Aethanol, < 78 °C, 412 ml Destillat à 96.5 Vol.% Alkohol
Fraktion 3 : Aromastoffe, > 78-97 °C, 36 ml Destillat à 22.5 Vol.% Alkohol.

Gaschromatographische Untersuchungen der erhaltenen Fraktionen zeigten, dass in der Fraktion 1 neben Aethanol vor allem Methanol und Aethylacetat (Vorlauf) enthalten sind, d. h. zwei Komponenten, auf die aus Qualitätsgründen ohnehin verzichtet werden sollte. Fraktion 2 enthält praktisch nur Aethanol. Fraktion 3 enthält 80-85 % der im Brüdenkondensat vorhandenen Aromastoffe. Der Alkoholgehalt der Fraktion 3 stammt aus azeotropen Gemischen von Aromastoffen mit Alkohol. Insgesamt beträgt der Alkoholanteil der aromahaltigen Fraktion 3 rund 1.5 % des ursprünglichen Gehalts des Brüdenkondensats.

5

Die in der Fraktion 3 angefallenen 36 ml Aromastoffe wurden nun mit dem entalkoholisierten Weinkonzentrat, mit entaromatisiertem Traubensaft der Sorte Blauburgunder (Pinot noir) und mit destilliertem Wasser zu trinkfertigem alkoholfreiem Wein aufgemischt nach folgender Formel :

| | |
|---|---:|
| Entalkoholisiertes Rotweinkonzentrat (Blauburgunder) | 1 422 ml |
| Destilliertes Wasser | 1 445 ml |
| Entaromatisierter Traubensaft (Blauburgunder) 16.6° Brix | 883 ml |
| Aromastoffe (Fraktion 3) | 36 ml |
| Alkoholfreier Rotwein | 3 786 ml |

Nach Zusatz von 50 mg/l $SO_2$ wurde diese Mischung über eine K-10 Filterschicht vorfiltriert, über einen EK-Filter keimfrei gemacht und steril in Flaschen abgefüllt. In der Degustation zeigte dieser alkoholfreie Wein ein typisch weiniges, an Blauburgunder erinnerndes Aroma und einen kräftigen, angenehmen Geschmack.

Die chemische Analyse dieses alkoholfreien Rotweins zeigte folgendes Resultat :

| | |
|---|---:|
| pH-Wert | 3.60 |
| Titrierbare Gesamtsäure | 5.0 g/l |
| Relative Dichte 20/20 | 1.02316 |
| Zucker nach Inversion | 42 g/l |
| Aethylalkohol | 2.4 g/l (= 2.34 g/kg) |

## Anwendungsbeispiel 2

100 Liter Apfelwein mit einem Alkoholgehalt von 5.1 Vol.% wurden in zwei Schritten in einem 1-stufigen UNIPEKTIN-Verdampfer konzentriert. In der ersten Passage wurden bei Normaldruck 15 % des Apfelweins verdampft. Es fielen 84.2 l Apfelweinkonzentrat mit 6.4 g/l Alkohol und 15.7 l aromahaltiges Brüdenkondensat à 28.3 Vol.% Alkohol an. In der zweiten Passage wurden bei einem Druck von 100 mbar zusätzliche 20 % der angefallenen 84.2 l Apfelweinkonzentrat abgedampft. Die gesamte Abdampfrate bezogen auf ursprünglichen Apfelwein betrug demnach 32 %. Das erhaltene Apfelweinkonzentrat wies einen restlichen Alkoholgehalt von 0.37 Vol.% (= 2.9 g/l) auf. Das im zweiten Verdampfungsschritt erhaltene Brüdenkondensat enthielt ausser Alkohol nur noch geringe Mengen an Aromastoffen, auf deren Rückgewinnung verzichtet werden kann.

2 Liter des aus der ersten Passage stammenden aromahaltigen Brüdenkondensats mit einem Alkoholgehalt von 28.3 Vol.% wurden in der im Anwendungsbeispiel 1 beschriebenen Labor-Rektifizierkolonne bei Normaldruck durch Gegenstromdestillation in 3 Fraktionen aufgetrennt. Die aromahaltige Fraktion 3 umfasste 46 ml Destillat à 27.8 Vol.% Alkohol.

Die Aufmischung zu trinkfertigem alkoholfreiem Apfelwein erfolgte nach folgender Formel :

| | |
|---|---:|
| Entalkoholisiertes Apfelweinkonzentrat | 3 840 ml |
| Destilliertes Wasser | 1 760 ml |
| Entaromatisierter Apfelsaft à 12.5° Brix | 2 800 ml |
| Aromastoffe (Fraktion 3) | 46 ml |
| Alkoholfreier Apfelwein | 8 446 ml |

Dieser alkoholfreie Apfelwein wurde nach Zusatz von 150 mg/l Ascorbinsäure über eine K-10 Filterschicht filtriert, in Flaschen abgefüllt, mit Kronenkork verschlossen und pasteurisiert. In der Degustation zeigte dieses alkoholfreie Getränk den typischen Geruch und Geschmack eines herkömmlichen Apfelweines.

Die chemische Analyse des trinkfertigen alkoholfreien Apfelweins ergab folgendes Resultat :

| | |
|---|---:|
| pH-Wert | 3.40 |
| Titrierbare Gesamtsäure | 5.3 g/l |
| Relative Dichte 20/20 | 1.02175 |
| Zucker nach Inversion | 36 g/l |
| Aethylalkohol | 2.6 g/l (=2.54 g/kg) |

## Anwendungsbeispiel 3

10 Liter des nach dem im Anwendungsbeispiel 1 beschriebenen Abdampfprozess erhaltenen aromahaltigen Brüdenkondensats aus Blauburgunder-Rotwein mit einem Alkoholgehalt von 26.8 Vol.% wurden in kontinuierlicher Arbeitsweise durch Gegenstromdestillation bei Normaldruck fraktioniert. Die im Anwendungsbeispiel 1 beschriebene Laborkolonne wurde so modifiziert, dass 320 mm unterhalb der Einspeisestelle der Kolonne eine Seitenentnahmestelle eingebaut wurde.

Das im Durchlauf auf 75 °C erwärmte Brüdenkondensat wurde auf halber Höhe der Kolonne eingespeist. Der Vorlauf und die Alkoholfraktion im Siedebereich bis gegen ca. 77 °C wurden über den Kolonnenkopf entnommen. Die über die seitliche Entnahmestelle anfallende Aromafraktion mit Siedebereich von 77-97 °C ergab total 205 ml Destillat mit einem Alkoholgehalt von 24.5 Vol.%. Das Flüssigkeitsniveau in der Destillationsblase wurde durch kontinuierliches Wegpumpen konstant gehalten. Für die Aufmischung zum alkoholfreien Rotwein wurden folgende Anteile verwendet :

| | |
|---|---:|
| Entalkoholisiertes Rotweinkonzentrat (Blauburgunder) | 7 110 ml |
| Mineralstofffreies Wasser | 7 225 ml |
| Entaromatisierter Blauburgunder-Traubensaft, 16.6° Brix | 4 415 ml |
| Aromastoffe, Siedebereich 77-97 °C | 205 ml |
| Alkoholfreier Rotwein | 18 955 ml |

Diese Mischung wurde mit Kohlensäuregas bis auf einen $CO_2$-Gehalt von 0.8 g/l imprägniert, mit 50 mg/l $SO_2$ versetzt, über K-10 Filterschichten vorfiltriert und über einen EK-Filter keimfrei gemacht und steril in Flaschen abgefüllt. Mit Ausnahme eines höheren Restalkoholgehaltes (total 2.9 g/l) war die chemische Analyse dieses alkoholfreien Rotweins gleich wie im Anwendungsbeispiel 1. In geruchlicher und geschmacklicher Hinsicht erinnerte dieses alkoholfreie Getränk stark an einen herkömmlichen Blauburgunderwein.

## Patentansprüche

1. Verfahren zur Herstellung von alkoholfreiem Wein oder Fruchtwein mit einem Restalkoholgehalt von weniger als 5 g/kg, dadurch gekennzeichnet, dass man mindestens 30 % eines vollständig vergorenen Weines bzw. Fruchtweines in einer Konzentrieranlage abdampft, das dabei anfallende alkohol- und aromahaltige Brüdenkondensat durch eine separate Gegenstromdestillation in einer Destillationskolonne mit mindestens 40 theoretischen Trennstufen fraktioniert, anschliessend nur die im Siedebereich von 77-97 °C anfallenden Aromafraktionen für die Aufmischung mit dem entalkoholisierten Wein-bzw. Fruchtweinkonzentrat, mit entaromatisiertem Trauben- bzw. Fruchtsaft und mit mineralstofffreiem Wasser verwendet und diese Mischung nach allgemein bekannten technologischen Massnahmen zum trinkfertigen alkoholfreien Getränk aufbereitet und gegen mikrobiellen und oxidativen Verderb statilisiert.

2. Verfahren gemäss Patentanspruch 1, dadurch gekennzeichnet, das man 30 bis 60 % des Weines bzw. Fruchtweines in einem mehrstufigen Verdampfer im Vakuum bei Temperaturen von 15-100 °C abdampft.

3. Verfahren nach Patentanspruch 1, dadurch gekennzeichnet, dass man vorerst 15-20 % des Weines bzw. Fruchtweines bei Normaldruck, anschliessend weitere 15-25 % bei Unterdruck verdampft.

4. Verfahren nach Patentanspruch 1, dadurch gekennzeichnet, dass man das durch Verdampfen von Wein bzw. Fruchtwein gewonnene alkohol- und aromahaltige Brüdenkondensat bei diskontinuierlichem Betrieb der Gegenstromdestillation im untern Drittel bis auf halber Höhe der Fraktionierkolonne einspeist, den Vorlauf, die Alkohol- und die Aroma-Fraktionen beim Kolonnenkopf entnimmt.

5. Verfahren nach Patentanspruch 1, dadurch gekennzeichnet, dass man das alkohol- und aromahaltige Brüdenkondensat bei kontinuierlichem Betrieb der Gegenstromdestillation im mitteleren Drittel der Fraktionierkolonne einspeist, den Vorlauf und die Alkoholfraktion beim Kolonnenkopf, die Aromafraktionen unterhalb der Einspeisestelle der Kolonne entnimmt.

6. Verfahren nach Patentanspruch 4 oder 5, dadurch gekennzeichnet, dass man die Gegenstromdestillation der alkohol- und aromahaltigen Brüdenkondensate bei Normaldruck durchführt.

7. Verfahren nach Patentanspruch 4 oder 5, dadurch gekennzeichnet, dass man die Gegenstromdestillation der alkohol- und aromahaltigen Brüdenkondensate bei Unterdruck durchführt.

8. Verfahren nach Patentanspruch 4 oder 5, dadurch gekennzeichnet, dass die bei der Gegenstromdestillation der alkohol- und aromahaltigen Brüdenkondensate erzielbare Gesamtausbeute an Aromastoffen über 80 % liegt.

9. Verfahren nach Patentanspruch 1, dadurch gekennzeichnet, dass die für die Entaromatisierung des Trauben bzw. Fruchtsaftes notwendige Abdampfrate 15-30 % beträgt.

## Claims

1. Method for the preparation of wine or fruit wine without alcohol having a residual alcohol content less than 5 g/kg, characterized in that at least 30 % of a fully fermented wine or fruit wine is evaporated in a concentrating plant, whereby the therefrom obtained alcohol and aroma containing vapour condensate is fractionalized by a separate counterflow distillation process carried out in a distillation column having

7

at least 40 theoretical separation stages, that for the subsequent mixing with the dealcoholized wine or fruit wine concentrate, with the dearomatized grape or fruit juice and with the demineralized water, only these aromatic fractions are used which are obtained within the boiling range from 77 °C to 79 °C and that this mixture is processed to a readily consumable non-alcoholic beverage using generally known technological procedures and that it is stabilized against micro-organisms and oxidation deterioration.

2. Method according to claim 1, characterized in that from 30 % to 60 % of the wine or fruit wine is evaporated in a multi-stage vacuum evaporator at temperatures from 15-100 °C.

3. Method according to claim 1, characterized in that firstly 15-20 % of the wine or fruit wine is evaporated at atmospheric pressure and subsequently further 15-25 % is evaporated at reduced pressure.

4. Method according to claim 1, characterized in that the alcohol and aromatics containing vapour condensate, which has been obtained by evaporation of wine or fruit wine, when using discontinuous operation, is fed-in within the range from one-third to one-half of the height into the fractionalizing column of the counterflow distillation and that the first runnings, the alcohol and aroma fractions are drawn off at the head of the column.

5. Method according to claim 1, characterized in that the alcohol and aromatics containing vapour condensate is fed-in at the centre one-third height of the fractionalizing column in case of continuous operation of the counterflow distillation and that the first runnings and the alcohol fraction are drawn off at the head of the column, whilst the aromatic fractions are removed underneath the feed point of the column.

6. Method according to claims 4 or 5, characterized in that the counterflow distillation of alcohol and aromatics containing vapour condensate is carried out at atmospheric pressure.

7. Method according to claims 4 or 5, characterized in that the counterflow distillation of the alcohol and aromatics containing vapour condensates is carried out at reduced pressure.

8. Method according to claims 4 or 5, characterized in that the total yield obtainable on aromatic substances, to be gained in the counterflow distillation of the alcohol and aromatics containing vapour condensates, is more than 80 %.

9. Method according to claim 1, characterized in that the evaporation rate, necessary for the dearomatizing of grape or fruit juices, is in the range from 15 % to 30 %.

## Revendications

1. Procédé de fabrication de vin de fruits ou de vin exempt d'alcool, avec une teneur résiduelle en alcool inférieure à 5 g/kg, caractérisé en ce que l'on évapore au moins 30 % d'un vin de fruits ou d'un vin totalement fermenté dans une installation de concentration, en ce que l'on fractionne le produit de condensation des vapeurs alcooliques et aromatisées obtenues, par l'intermédiaire d'une distillation à contre-courant séparée, réalisée dans une colonne de distillation avec au moins 40 étages ou plateaux de séparation théoriques, en ce que l'on n'utilise seulement ensuite que les fractions aromatiques obtenues dans l'intervalle d'ébullition de 77 à 97 °C pour le mélange au produit concentré de vin de fruits ou de vin désalcoolisé, à du jus de fruits ou de raisins désaromatisé et à de l'eau déminéralisée et en ce que l'on transforme ce mélange selon des procédés industriels généralement connus, en une boisson exempte d'alcool prête à être bue et on la stabilise contre l'altération microbienne et oxydante.

2. Procédé suivant la revendication 1, caractérisé en ce que l'on évapore de 30 à 60 % du vin ou du vin de fruits dans un évaporateur à étages multiples, sous vide et à des températures de 15 à 100 °C.

3. Procédé suivant la revendication 1, caractérisé en ce que l'on évapore d'abord 15 à 20 % du vin ou du vin de fruits à la pression normale, puis on en évapore de 15 à 25 % supplémentaires sous pression réduite.

4. Procédé suivant la revendication 1, caractérisé en ce que l'on injecte le produit de condensation des vapeurs alcooliques et aromatisées obtenues par l'évaporation du vin de fruits ou du vin, au cours de la distillation à contre-courant en service discontinu, dans un endroit de la colonne de fractionnement situé entre son tiers inférieur et la moitié de sa hauteur et on prélève le produit de tête, les fractions alcooliques et aromatisées en tête de la colonne.

5. Procédé suivant la revendication 1, caractérisé en ce que l'on injecte le produit de condensation des vapeurs d'alcool et aromatisées au cours de la distillation en contre-courant en service continu dans le tiers médian de la colonne de fractionnement et on prélève le produit de tête et la fraction alcoolique en tête de la colonne et on prélève les fractions aromatisées de la colonne en dessous de l'endroit d'injection.

6. Procédé suivant la revendication 4 ou 5, caractérisé en ce que l'on réalise la distillation en contre-courant des produits de condensation des vapeurs alcooliques et aromatisées à la pression normale.

7. Procédé suivant la revendication 4 ou 5, caractérisé en ce que l'on réalise la distillation en contre-courant des produits de condensation des vapeurs alcooliques et aromatisées sous pression réduite.

8. Procédé suivant la revendication 4 ou 5, caractérisé en ce que le rendement global en substances aromatiques que l'on peut obtenir au cours de la distillation en contre-courant des produits de condensation des vapeurs alcooliques et aromatiques est supérieur à 80 %.

9. Procédé suivant la revendication 1, caractérisé en ce que le taux d'évaporation nécessaire à la désaromatisation du jus de fruits ou de raisins varie de 15 à 30 %.